# EUROPÄISCHE PATENTSCHRIFT

(11) **EP 1 506 360 B1**
(45) Veröffentlichungstag und Bekanntmachung des Hinweises auf die Patenterteilung: **12.10.2005**
(21) Anmeldenummer: 03755088.6
(22) Anmeldetag: 16.04.2003
(51) Int. Cl.: F16H 63/48

(54) **PARKSPERRE EINES GETRIEBES**
TRANSMISSION PARKING BRAKE
FREIN DE STATIONNEMENT INSTALLE DANS UNE TRANSMISSION

(30) Priorität: 23.05.2002 DE 10222718
(43) Veröffentlichungstag der Anmeldung: 16.02.2005
(73) Patentinhaber: INA-Schaeffler KG, 91074 Herzogenaurach (DE)
(72) Erfinder: KRÄMER, Klaus, 91460 Baudenbach (DE); DÖRRIE, Swen, 91074 Herzogenaurach (DE)
(86) Internationale Anmeldenummer: PCT/EP2003/003982
(87) Internationale Veröffentlichungsnummer: WO 2003/100299

(56) Entgegenhaltungen:
- EP-A- 1 251 301
- WO-A-97/14575
- WO-A-99/61296
- DE-A- 3 825 286

## Beschreibung

### Gebiet der Erfindung

Die Erfindung betrifft eine Parksperre eines Getriebes, insbesondere eines Kraftfahrzeuggetriebes nach den Merkmalen des Oberbegriffs des Anspruchs 1.

### Hintergrund der Erfindung

In DE 38 25 286 A1 ist eine Parksperre der gattungsbildenden Art beschrieben. Die Parksperre weist ein auf einer Getriebewelle sitzendes Parksperrenrad, einen Sperrring, ein als Einrückelement verwendetes Parksperrengestänge und eine als Ausrückelement eingesetzte Kegelfeder auf. Das Parksperrenrad sitzt zu der Mittelachse der Getriebewelle konzentrisch, auf der Getriebewelle axial und somit längs fest sowie zur Getriebewelle drehfest, jedoch mit der Getriebewelle relativ zu einem Gehäuse des Getriebes um die Mittelachse drehbar. Der Sperrring ist zu der Mittelachse der Getriebewelle konzentrisch, zu dem Gehäuse und zur Getriebewelle axial beweglich und zu dem Gehäuse drehfest angeordnet. Dabei geht der Sperrring, in diesem Fall mittels einer Stützverzahnung, eine formschlüssige Stützverbindung zu einem Gehäuse ein. Die Stützverzahnung greift in eine gehäusefeste Gegenstützverzahnung ein, die den Sperrring verdrehfest aber axial zu dem Gehäuse beweglich führt. Der Sperrring und das Parksperrenrad sind miteinander zu einer Sperrverbindung verbindbar, mit der die Parksperre des Fahrzeugs eingelegt ist. An dem Parksperrenrad ist dazu in diesem Fall eine Gegensperrverzahnung zu einer Sperrverzahnung an dem Sperrring ausgebildet. Die Sperrverzahnungen weisen zueinander und sind ineinander einrückbar und von einander trennbar. Zumindest zum Einrücken der Sperrverzahnung in die Gegensperrverzahnung greift das Einrückelement an dem Sperrring an und verschiebt den Sperrring gegen die Kraft des Ausrückelementes axial in Richtung des Parksperrenrades bis die Sperrverzahnungen formschlüssig ineinander greifen. In der Parkstellungen greifen die Verzahnungen formschlüssig ineinander, wodurch der Sperrring und das Parksperrenrad miteinander die Sperrverbindung eingehen. Dabei ist das Parksperrenrad und damit die Welle über die Gegensperrverzahnung an der Sperrverzahnung drehfest zu dem Gehäuse gehalten, weil sich der Sperrring mittels der Stützverzahnung zu dem Gehäuse drehfest abstützt. Die Sperrverbindung ist wieder aufgehoben, wenn das Ausrückelement den Sperrring axial zurück verschoben hat und die Sperrverzahnungen somit voneinander getrennt sind. Die Kosten für die Herstellung der Einzelteile dieser Parksperre und für ihre Montage in dem Getriebe sind relativ hoch.

### Zusammenfassung der Erfindung

Die Aufgabe der Erfindung ist es, eine Parksperre zu schaffen, die eine relativ geringe Anzahl an Einzelteilen aufweist und deren Einzelteile sich kostengünstig herstellen sowie montieren lassen.

Diese Aufgabe ist nach dem Gegenstand des kennzeichnenden Teils des Anspruchs 1 dadurch gelöst, dass das Einrückelement wenigstens eine Feder ist, wobei die Feder den Sperrring axial gegen das Ausrückelement vorspannt und dass das Ausrückelement ein mit einem hydraulischen Druckmittel betätigbarer Kolben ist, wobei der Sperrring mittels des druckmittelbetätigten Kolbens axial aus der Sperrverbindung lösbar und dabei gegen die Vorspannung der Feder verschiebbar ist. Der Sperrring ist in der Parksperre axial zwischen wenigstens einer oder mehreren Federn als Einrückelemente auf der einen Seite und einem Kolben als Ausrückelement auf der anderen Seite angeordnet. Im Fahrbetrieb ist der Sperrring mittels des Kolbens beaufschlagt. Der hydraulisch betätigte Kolben hält dabei den Sperrring getrennt von dem Parksperrenrad. Das Parksperrenrad ist um die Mittelachse der Getriebewelle mit der Getriebewelle frei drehbar. Die Getriebewelle ist nicht gesperrt. Der Kolben hält den Sperrring mit einer Kraft in dieser Position, die mindestens höher ist als die auf der Gegenseite des Sperrringes in Richtung des Kolbens wirkende Kraft der gegen den Sperrring vorgespannten Feder(n). Der Öldruck auf dem Kolben ist z. B. durch eine von dem laufenden Motor des Fahrzeuges angetriebene Ölpumpe erzeugt. In der Parkstellung des Getriebes ist die Ölzufuhr zu dem Kolben abgeschaltet oder der Kolben ist zumindest vom Druck des hydraulischen Druckmittels frei. Das Potential der Feder verschiebt den Sperrring in die vorab beschriebene formschlüssige Sperrverbindung mit dem Parksperrenrad und verdrängt dabei das drucklose Öl zumindest teilweise aus der Druckkammer der Kolbeneinheit. In der Sperrverbindung liegt die Feder weiterhin mit Vorspannung an dem Sperrring an und sichert somit die Sperrverbindung. Die Getriebewelle ist gegen Verdrehen um ihre Mittelachse gesperrt.

Eine Ausgestaltung der Erfindung sieht vor, dass das Parksperrenrad eine erste Sperrverzahnung sowie der Sperrring eine der ersten Sperrverzahnung zugewandte sowie mit der ersten Sperrverzahnung korrespondierende zweite Sperrverzahnung aufweist. Die Sperrverbindung ist demnach mittels der in die erste Sperrverzahnung an dem Parksperrenrad eingerückten zweiten Sperrverzahnung an dem Sperrring hergestellt. Die Sperrverzahnung an dem Parksperrenrad ist vorzugsweise an einem Außenumfang des Parksperrenrades durchgängig umlaufend oder abschnittsweise ausgebildet. Der Sperrring weist dabei in einem Loch eine zu der Sperrverzahnung des Parksperrenrades passende Innenverzahnung auf. Die Sperrverzahnung an dem Sperrring ist axial in eine formschlüssige Sperrverbindung mit der Sperrverzahnung außen an dem Parksperrenrad verschiebbar. Die Sperrverzahnung ist vorzugsweise eine Keilnutenverzahnung, es ist aber auch die Anwendung aller anderen geeigneten Verzahnungen in dieser Anordnung denkbar. Alternativ dazu weist das Parksperrenrad an einer dem Sperrring zugewandten Stirnseite eine umfangsseitig umlaufende bzw. abschnittsweise ausgebildete Gegensperrverzahnung auf. In diese Gegensperrverzahnung greift eine stirnseitig an dem Sperrring ausgebildete sowie in Richtung der Gegensperrverzahnung an dem Parksperrenrad weisende Sperrverzahnung ein. Der mittels des Einrückelementes axial auf den Parksperrenring zu verschobene Sperrring greift mit der Sperrverzahnung stirnseitig in die Gegensperrverzahnung an dem Parksperrenring ein. Die Zähne der in den vorgenannten Varianten beschriebenen Verzahnungen sind beispielsweise seitlich der einander zugewandten Zahnfronten leicht abgeschrägt oder abgerundet, um ein besseres Einspuren der Verzahnungen zu ermögtichen. Unabhängig davon kann die Parksperre auch bei einer Zahn-auf-Zahn-Stellung der aufeinander wirkenden Sperrverzahnungen wirksam werden, da der Sperrring und damit die Sperrverzahnung an dem Sperrring mittels der Kraft der Feder gegen die Sperrverzahnung an dem Parksperrenrad vorgespannt ist. Ein leichtes Verdrehen der Getriebewelle um ihre Mittelachse mit dem Parksperrenrad und seiner Gegensperrverzahnung gegenüber der drehfesten Sperrverzahnung an dem Sperrring genügt um die Zähne aus der Zahnauf-Zahn-Stellung gegeneinander zu verdrehen, bis die Zähne jeweils auf eine Lücke treffen. Der Sperrring ist dann aufgrund des Potentials der Feder weiter in die Sperrstellung verschiebbar, wenn die Zähne in eine Lücke der Gegenverzahnung eingreifen.

Für die Sperrverbindung sind auch alle miteinander in Umfangsrichtung des Parksperrenrades in einen formschlüssigen Eingriff bringbaren Elemente, wie z. B. die Elemente einer Klauenkupplung oder in Nuten bzw. ähnliche Ausnehmungen eingreifende und am Umfang eines bzw. wechselseitig an beiden der Sperrelemente ausgebildete Mitnehmer einsetzbar.

Eine weitere Ausgestaltung der Erfindung sieht vor, dass der Sperrring mit einer ersten Stützverzahnung versehen ist und dass die Parksperre eine mit der ersten Stützverzahnung korrespondierende zweite Stützverzahnung aufweist. Der Sperrring greift mit seiner Stützverzahnung in die zu dem Gehäuse feste Gegenstützverzahnung ein und ist somit mittels seiner Stützverzahnung zu dem Gehäuse drehfest sowie zu der Welle und dem Gehäuse axial verschiebbar in der Gegenstützverzahnung zumindest geführt. Denkbar ist auch, dass der Sperrring sich zusätzlich radial und damit zur Mittelachse der Getriebewelle zentriert in der Gegenstützverzahnung abstützt. Die Flanken der Zähne der Verzahnungen verlaufen längs mit der Mittelachse der Getriebewelle. Die Zahnlücken zwischen den Zähnen der Verzahnung sind parallel zu der Mittelachse der Getriebewelle ausgerichtet. Dadurch ist der Sperrring über seine in die Zahnlücken der Gegenstützverzahnung eingreifenden Zähne axial verschiebbar zu dem Gehäuse bzw. der Getriebewelle geführt. Die Zähne der zu dem Gehäuse festen Stützverzahnung sind in Längsrichtung der Getriebewelle breiter ausgelegt als die Zähne der Stützverzahnung an dem Sperrring. Die zu dem Gehäuse feste Sperrverzahnung ist dabei so breit, dass der Sperrring über seinen gesamten durch den Ausrück- bzw. Einrückvorgang bestimmten axialen Hub in der Verzahnung längs verschiebbar und drehfest zu dem Gehäuse geführt ist.

Eine weitere Ausgestaltung der Erfindung sieht vor, dass die Parksperre anstelle der Stützverzahnung wenigstens eine in Umfangsrichtung des Sperrringes beidseitig begrenzte sowie zumindest zu einem Mitnehmer an dem Sperrring offene Nut aufweist. Der Sperrring weist einen in diese Nut eingreifenden Mitnehmer auf. Die Nut erstreckt sich gleichgerichtet zur Mittelachse der Welle und lässt mit ihrer Länge mindestens den Hub zu, den der Sperrring beim Einrücken in die Sperrverzahnung bzw. beim Trennen der Sperrverbindung axial zurücklegt. In Umfangsrichtung ist der Sperrring mittels des Mitnehmers zu dem Gehäuse drehfest in der Nut gehalten. Der Mitnehmer geht beispielsweise radial nach außen weisend von dem Sperrring ab und greift in eine an dem Gehäuse des Getriebes oder in eine Nut in einer die Parksperre umgreifenden Hülse ein. Vorzugsweise sind mindestens zwei bzw. drei der Mitnehmer am Umfang des Sperrringes verteilt angeordnet, wobei jeder der Mitnehmer in eine der beschriebenen Nuten eingreift.

Der Aufwand zur Montage einer Parksperre beim Getriebehersteller ist reduziert, wenn die Parksperre eine Baueinheit aus zumindest einer Führungshülse, aus der Sperrscheibe, aus dem Kolben sowie aus der Feder ist. Es ist auch denkbar, das Parksperrenrad in diese Baueinheit zu integrieren. Die Sperrscheibe, der Kolben und die Feder sind in der Führungshülse aufgenommen, wobei die Führungshülse vorzugsweise zylindrisch ausgebildet ist. Der Sperrring und der Kolben sind in der Führungshülse axial beweglich geführt. Außerdem ist der Sperrring in der Führungshülse drehfest zu dem Gehäuse abgestützt. Dazu ist die Führungshülse in eine geeignete Aufnahme, wie z. B. eine Bohrung, des Gehäuses des Getriebes eingesetzt bzw. eingepresst oder an ein Gehäuse des Getriebes angeflanscht. Die Führungshülse weist entweder die Längsnuten für den Eingriff des Mitnehmers oder die Gegenstützverzahnung zur der Stützverzahnung an dem Sperrring auf, wodurch der Sperrring drehfest in der Führungshülse abgestützt aber axial verschiebbar in dieser geführt ist. Die Montage einer derartigen Führungshülse ist einfach. Die Parksperre ist kompakt ausgebildet und kostengünstig herzustellen. Nach dem Einsetzen der Einzelteile der Parksperre in die Führungshülse ist die Führungshülse bevorzugt mit einem Deckel verschlossen.

Es ist weiter vorgesehen, dass die Führungshülse der Baueinheit einen Druckraum für das hydraulische Druckmittel aufweist, wobei der Druckraum radial von zur Mittelachse gleichgerichteten Schenkeln des ringförmig sowie in seinem Längsschnitt U-förmig ausgebildeten Kolbens sowie zumindest zeitweise anteilig von der Führungshülse umschlossen ist. Stirnseitig ist der Druckraum zur einen Seite von einem ringförmigen Bodenabschnitt der Führungshülse und zur anderen Seite von der Rückseite des zu dem Sperrring weisenden Kolbenbodens des Kolbens begrenzt. Der Kolben ist in der Führungshülse zumeist in einem zylindrischen Abschnitt innerhalb seines Ausrückhubes axial beweglich geführt. Der Druckraum ist zu dem Sperrring und zum Einrückelement hin durch wenigstens eine zwischen dem Kolben und der Führungshülse angeordnete Dichtung abgedichtet. Die Dichtung ist konzentrisch zu der Mittelachse angeordnet und sitzt auf dem Kolben bzw. an einer zylindrischen Wandung der Führungshülse. Bevorzugt sind mindestens zwei der Dichtungen in die Parksperre integriert, wobei die eine der Dichtungen, z. B. ein O-Ring, umfangsseitig auf dem Kolben sitzt und die andere der Dichtungen außen an einem von dem Boden der Führungshülse axial durchgestellten zylindrischen Abschnitt aufgenommen ist.

Die Einzelteile der Führungshülse sind vorzugsweise durch Umformen aus Blech hergestellt, wobei auf spanende Nacharbeit weitestgehend verzichtet wird. So sind die Führungshülse und der Kolben Press- bzw. Ziehteile aus Blech. Der Sperrring ist vorzugsweise ein Stanz-Prägeteil aus Blech. Das Parksperrenrad ist entweder ein Ziehteil, Fließpressteil oder ein Schmiedeteil. Die Verdrehsicherung des Parksperrenrades zur Getriebewelle ist beispielsweise eine Keilverzahnung.

### Kurze Beschreibung der Zeichnungen

Die Erfindung wird nachfolgend anhand von Ausführungsbeispielen näher erläutert. Es zeigen:
- Figur 1: ein Ausführungsbeispiel einer zu einer Baueinheit vormontierten Parksperre im Längsschnitt, wobei der Sperrring und das Parksperrenrad zueinander in einer Sperrverbindung stehen,
- Figur 2: den Querschnitt der Parksperre nach Figur 1 entlang der Linie II-II,
- Figur 3: die gelöste Parksperre nach Figur 1,
- Figur 4: ein weiteres Ausführungsbeispiel einer zu einer Baueinheit vormontierten Parksperre, dargestellt im Längsschnitt und
- Figur 5: den Querschnitt der Parksperre nach Figur 4 entlang der Linie VI-VI.

### Detaillierte Beschreibung der Zeichnungen

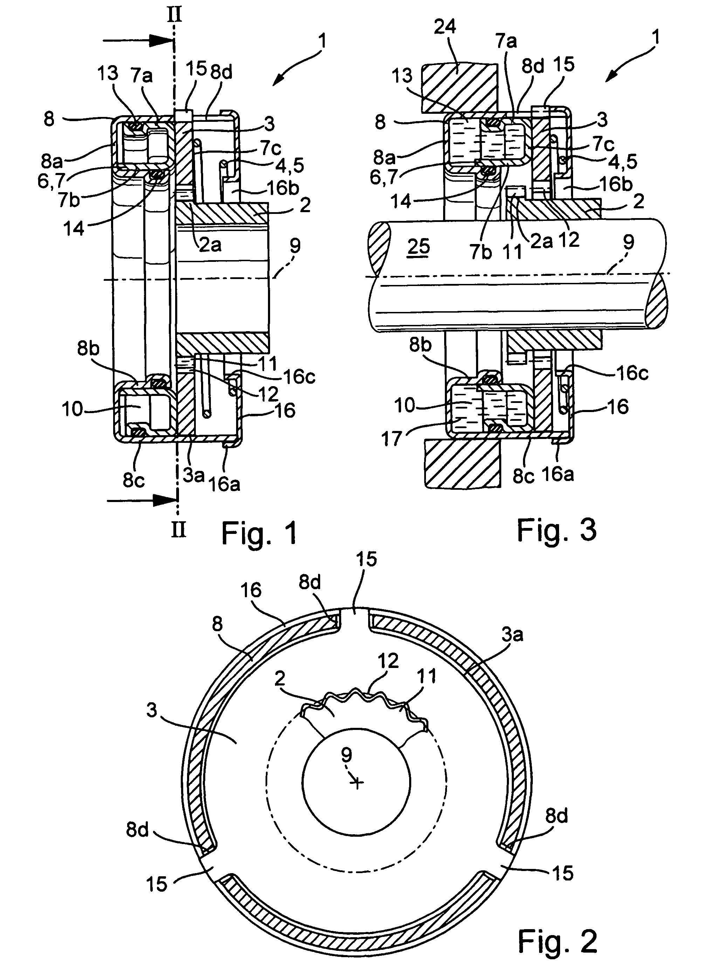

Figur 1 und Figur 2 zeigen eine Parksperre 1 mit einem Parksperrenrad 2, einem Sperrring 3, einem Einrückelement 4 in Form einer Feder 5 sowie einem Ausrückelement 6 in Form eines Kolbens 7. Die Einzelteile der Parksperre 1 sind zu einer Baueinheit zusammengefügt. Dazu sind das Parksperrenrad 2, der Sperrring 3 sowie der Kolben 7 und die Feder 5 in einer Führungshülse 8 aufgenommen. Die Führungshülse 8 ist ein napfförmig ausgebildetes Ziehteil aus Blech mit einem ringförmigen Boden 8a, von dem aus ein mit der Mittelachse 9 einer Getriebewelle 25 gleichgerichtet verlaufender sowie zylindrisch ausgebildeter Bord 8b in die Führungshülse 8 durchgestellt ist. Zwischen dem Bord 8b und der zylindrischen Wandung 8c ist der Kolben 7 aufgenommen sowie axial beweglich geführt. Der Kolben 7 ist ein ringförmiges Ziehteil aus Blech, das im Längsschnitt betrachtet einen U-förmigen Querschnitt aufweist. Die Schenkel 7a und 7b des Kolbens 7 verlaufen gleichgerichtet mit der Mittelachse 9 und schließen einen Druckraum 10 radial nach innen und außen ab. In axialer Richtung ist der Druckraum 10 mittels des Bodens 8a der Führungshülse 8 zur einen Seite sowie zur anderen Seite durch den Kolbenboden 7c des Kolbens 7 begrenzt. Zwei Dichtungen 13 und 14 dichten den Druckraum 10 gegen das Austreten des hydraulischen Druckmittels ab. Die Dichtung 13, in Form eines O-Ringes, sitzt dabei in einer in den Schenkel 7a eingeformten Ringnut und ist gegen die Wandung 8c vorgespannt. Die Dichtung 14 sitzt in einer in den Bord 8b eingeformten Ringnut und ist gegen den Kolben 7 vorgespannt.

Der Sperrring 3 ist eine gestanzte Scheibe und weist an seinem Innenumfang eine Sperrverzahnung 12 auf. Von dem Sperrring 3 stehen radial nach außen drei Mitnehmer 15 ab. Jeder der Mitnehmer 15 greift in eine längsverlaufende Nut 8d der Führungshülse 8 ein. Der Sperrring 3 ist mittels der in die Nuten 8d eingreifenden Mitnehmer 15 in Umfangsrichtung gegen Verdrehen um die Mittelachse 9 an der Führungshülse 8 gesichert. Gleichzeitig stützt sich der Sperrring 3 mit seinem Außenumfang 3a innen radial geführt an der Führungshülse 8 ab. Die Feder 5 ist eine Kegelfeder und konzentrisch zu der Mittelachse 9 in der Führungshülse 8 aufgenommen. Die Führungshülse 8 ist an ihrer dem Boden 8a gegenüberliegenden Öffnung mit einem Deckel 16 verschlossen. Der Deckel 16 weist einen Rand 16a auf, mit dem der feste Sitz des Dekkels 16 auf dem Außenumfang der Führungshülse 8 abgesichert ist. Der Dekkel 16 ist weiterhin mit einem Durchgangsloch 16b versehen, durch das ein Bund 2a des Parksperrenrades 2 axial hindurch greift. Von dem Rand des Durchgangsloches 16b ist ein Zentrierbord 16c in die Führungshülse 8 durchgestellt. An dem Zentrierbord 16c ist die Feder 5 zur Mittelachse 9 zentriert.

In Figur 1 ist die Parksperre 1 in einer gesperrten Stellung dargestellt. Dazu geht der Sperrring 3 über die Sperrverzahnung 12 eine Sperrverbindung mit dem Parksperrenrad 2 ein. Die Sperrverzahnung 12 ist in eine Gegensperrverzahnung 11 an dem Parksperrenrad 2 eingerückt. Das Parksperrenrad 2 sitzt fest auf der Getriebewelle 25. Eine Drehbewegung der Getriebewelle 25 und somit des Parksperrenrades 2 um die Mittelachse 9 ist verhindert, da sich der Sperrring über die Mitnehmer 15 in Umfangsrichtung in den Nuten 8d abstützt. Die Feder 5 spannt den Sperrring 3 gegen den Kolben 7 bzw. gegen die axiale Begrenzung der Nut 8d vor und sichert die Sperrstellung der Parksperre 1.

Figur 3 zeigt die Parksperre 1 während des Fahrzeugbetriebes. Die Führungshülse 8 und damit die Parksperre 1 als eine Baueinheit sitzt fest in einem Gehäuse 24 des Getriebes. Der Druckraum 10 ist mit einem hydraulischen Druckmittel 17 befüllt. Der druckbeaufschlagte Kolben 7 bewegt sich axial in Richtung des Deckels 16 und verschiebt den Sperrring 3 gegen die Kraft der Feder 5 mindestens solange, bis die Sperrverzahnung 12 aus der Gegensperrverzahnung 11 ausgerückt ist. Das Parksperrenrad 2 ist mit der Getriebewelle in der Parksperre 1 um die Mittelachse 9 frei drehbar. Durch den axialen Hub des Kolbens 7 ist der Druckraum 10 vergrößert, wodurch der Druckraum 10 umfangsseitig teilweise durch die Wandung 8c und den Bord 8b der Führungshülse 8 sowie durch die Schenkel 7a und 7b des Kolbens 7 begrenzt ist. Bei Druckentlastung in dem Druckraum 10, z. B. wenn das Fahrzeug abgestellt wird, verschiebt die Feder 5 den Sperrring 3 und damit den Kolben 7 in die Sperrstellung nach Figur 1.

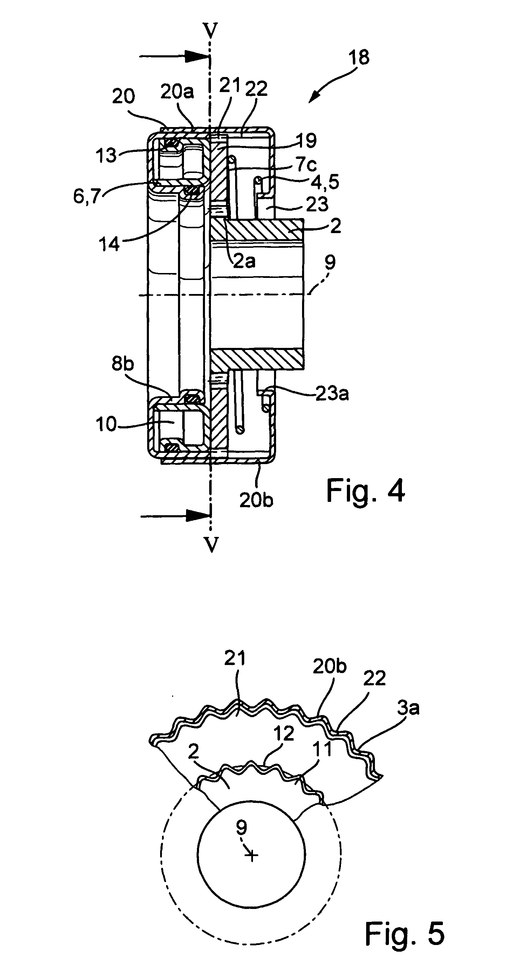

Die Figuren 4 und 5 zeigen ein weiteres Ausführungsbeispiel einer Parksperre 18. Die Parksperre 18 ist wiederum zu einer Baueinheit zusammengefügt. Dabei sind das Parksperrenrad 2, der Kolben 7, ein Sperrring 19 und die Feder 5 in einer zweiteiligen Führungshülse 20 aufgenommen. Die Führungshülse 20 weist einen Führungsabschnitt 20a sowie einen Stützabschnitt 20b auf. Der Stützabschnitt 20b ist auf den Führungsabschnitt 20a aufgepresst. Der Sperrring 19 weist die Sperrverzahnung 12 sowie eine Stützverzahnung 21 auf. Mit der am Außenumfang des Sperrringes 19 umlaufenden Stützverzahnung 21 greift der Sperrring 19 in eine entsprechende Gegenstützverzahnung 22 an dem Stützabschnitt 20b ein. Die Führungshülse 20 ist verdrehfest zu einem nicht dargestellten Gehäuse eines Getriebes angeordnet. Der Sperrring 19 ist somit gegen eine Drehbewegung um die Mittelachse 9 verdrehfest an dem Gehäuse abgestützt. Die Breite der einzelnen Zähne der Gegenstützverzahnung 22 lässt mindestens den Hub zu, den der Sperrring 19 axial zum Einlegen bzw. Lösen der Parksperre 18 zurücklegt. Der Führungsabschnitt 20a der Führungshülse 20 weist ein Durchgangsloch 23 auf, durch das der Bund 2a des Parksperrenrades axial hindurchgeführt ist. An dem Rand des Durchgangsloches 23 ist ein Zentrierbord 23a ausgebildet. An dem Zentrierbord ist die Feder 7 radial zur Mittelachse 9 zentriert.

### Bezugszeichen

- 1: Parksperre
- 2: Parksperrenrad
- 2a: Bund
- 3: Sperrring
- 3a: Außenumfang
- 4: Einrückelement
- 5: Feder
- 6: Ausrückelement
- 7: Kolben
- 7a: Schenkel
- 7b: Schenkel
- 7c: Kolbenboden
- 8: Führungshülse
- 8a: Boden
- 8b: Bord
- 8c: Wandung
- 8d: Nut
- 9: Mittelachse
- 10: Druckraum
- 11: Gegensperrverzahnung
- 12: Sperrverzahnung
- 13: Dichtung
- 14: Dichtung
- 15: Mitnehmer
- 16: Deckel
- 16a: Rand
- 16b: Durchgangsloch
- 16c: Zentrierbord
- 17: Druckmittel
- 18: Parksperre
- 19: Sperrring
- 20: Führungshülse
- 20a: Führungsabschnitt
- 20b: Stützabschnitt
- 21: Stützverzahnung
- 22: Gegenstützverzahnung
- 23: Durchgangsloch
- 23a: Zentrierbord
- 24: Gehäuse
- 25: Welle

## Patentansprüche

1. Parksperre (1, 18) eines Getriebes mit einem konzentrisch zu der Mittelachse (9) einer Welle angeordneten und axial sowie verdrehfest zu der Welle (25) jedoch relativ zu einem Gehäuse (24) mit der Welle (25) um die Mittelachse (9) der Welle (25) drehbaren Parksperrenrad (2), die Parksperre (1, 8) weiter mit einem konzentrisch zu der Mittelachse (9) der Welle (25) angeordneten und axial zu der Welle (25) sowie zu dem Gehäuse (24) beweglichen, jedoch zu dem Gehäuse (24) um die Mittelachse drehfesten Sperrring (3) und die Parksperre (1, 18) weiterhin mit einem Einrückelement (4) und mit einem Ausrückelement (6), wobei der Sperrring (3) mittels des Einrückelementes (4) axial in eine formschlüssige Sperrverbindung mit dem Parksperrenrad (2) verschiebbar ist, wodurch die Welle (25) gegenüber dem Gehäuse (24) gegen Verdrehen um die Mittelachse sperrbar ist und wobei der Sperrring (3) mittels des Ausrückelementes (6) aus der Sperrverbindung axial lösbar ist, **dadurch gekennzeichnet, dass** das Einrückelement (4) wenigstens eine Feder (5) ist, wobei die Feder (5) den Sperrring (3) axial gegen das Ausrückelement (6) vorspannt und dass das Ausrückelement (6) ein mit einem hydraulischen Druckmittel betätigbarer Kolben (7) ist, wobei der Sperrring (3) mittels des druckmittelbetätigten Kolbens (7) axial aus der Sperrverbindung lösbar und dabei gegen die Vorspannung der Feder (5) verschiebbar ist.

2. Parksperre nach Anspruch 1, **dadurch gekennzeichnet, dass** das Parksperrenrad (2) eine erste Sperrverzahnung (11) sowie der Sperrring (3, 19) eine der ersten Sperrverzahnung (11) zugewandte sowie mit der ersten Sperrverzahnung (11) korrespondierende zweite Sperrverzahnung (12) aufweist, wobei die Sperrverbindung mittels der in die erste Sperrverzahnung (11) einrückbaren zweiten Sperrverzahnung (12) herstellbar ist.

3. Parksperre nach Anspruch 2, **dadurch gekennzeichnet, dass** die erste Sperrverzahnung (11) umlaufend zur Mittelachse (9) außenseitig an dem Parksperrenrad (2) ausgebildet ist und dass die zweite Sperrverzahnung (12) innenseitig an dem Sperrring (3) um die Mittelachse (9) verläuft.

4. Parksperre nach Anspruch 1, **dadurch gekennzeichnet, dass** der Sperrring (19) mit einer ersten Stützverzahnung (21) versehen ist und dass die Parksperre (18) eine mit der ersten Stützverzahnung (21) korrespondierende zweite Stützverzahnung (22) aufweist, wobei der Sperrring (19) mittels der ersten Stützverzahnung (21) zu dem Gehäuse (24) drehfest sowie zu der Welle und zu dem Gehäuse (24) axial verschiebbar in der zweiten Stützverzahnung (22) zumindest geführt ist.

5. Parksperre nach Anspruch 1, **dadurch gekennzeichnet, dass** die Parksperre (1) wenigstens eine in Umfangsrichtung des Sperrringes (3) beidseitig begrenzte sowie zumindest zu einem Mitnehmer (15) an dem Sperrring (3) offene Nut (8d) aufweist, wobei der Mitnehmer (15) von dem Sperrring (3) aus in die Nut (8d) eingreift sowie axial in der Nut (8d) verschiebbar ist und wobei der Sperrring (3) mittels des Mitnehmers (15) zu dem Gehäuse (24) drehfest sowie zu der Welle (25) und zu dem Gehäuse (24) axial verschiebbar in der Nut (8d) geführt ist.

6. Parksperre nach Anspruch 1, **dadurch gekennzeichnet, dass** die Parksperre (1, 18) eine Baueinheit aus zumindest einer Führungshülse (8, 20), aus dem Sperrring (3, 19), aus dem Kolben (7) sowie aus der Feder (5) ist, wobei der Sperrring (3, 19), der Kolben (7) und die Feder (5) in der Führungshülse (8, 20) aufgenommen sind und wobei der Sperrring (3, 19) und der Kolben (7) in der Führungshülse (8, 20) axial beweglich geführt sind sowie der Sperrring (3, 19) in der Führungshülse (8, 20) drehfest zu dem Gehäuse (24) abgestützt ist.

7. Parksperre nach Anspruch 6, **dadurch gekennzeichnet, dass** die Führungshülse (8) an wenigstens einer axialen Öffnung mit einem ein Durchgangsloch (16b) für die Welle (25) aufweisenden Deckel (16) versehen ist.

8. Parksperre nach Anspruch 6, **dadurch gekennzeichnet, dass** die Führungshülse (8, 20) einen Druckraum (10) für das hydraulische Druckmittel (17) aufweist, wobei der Druckraum (10) radial von zur Mittelachse (9) gleichgerichteten Schenkeln (7a, 7b) des ringförmig sowie in seinem Längsschnitt U-förmig ausgebildeten Kolbens (7) und zumindest zeitweise anteilig von der Führungshülse (8, 20) umschlossen ist und wobei der Druckraum (10) zu einer Seite axial von einem ringförmigen Boden (8a) der Führungshülse (8, 20) und zu der anderen Seite axial von der Rückseite eines zu dem Sperrring (3, 19) weisenden Kolbenbodens (7c) des Kolbens (7) begrenzt ist.

9. Parksperre nach Anspruch 8, **dadurch gekennzeichnet, dass** die Parksperre (1, 18) wenigstens eine zwischen dem Kolben (7) und der Führungshülse (8, 20) angeordnete Dichtung (13, 14) aufweist, wobei die Dichtung (13, 14) konzentrisch zu der Mittelachse (9) angeordnet ist sowie an der Führungshülse (8, 20) und dem Kolben (7), dabei den Druckraum (10) abdichtend, anliegt.

10. Parksperre nach Anspruch 6 oder 8, **dadurch gekennzeichnet, dass** die Führungshülse (8, 20) und der Kolben (7) Umformteile aus Blech sind.

11. Parksperre nach Anspruch 1, 6 oder 8, **dadurch gekennzeichnet, dass** der Sperrring (3, 19) ein Stanz-Prägeteil aus Blech ist.

12. Parksperre nach Anspruch 1, 6 oder 8 **dadurch gekennzeichnet, dass** das Parksperrenrad ein Umformteil ist.

## Claims

1. A parking lock (1, 18) of a transmission, said parking lock comprising a parking lock wheel (2) arranged concentrically with a central axis (9) of a shaft while being fixed axially and against rotation relative to the shaft (25) but able to rotate with the shaft (25) about the central axis (9) of the shaft (25) relative to a housing (24), the parking lock (1, 18) further comprising a locking ring (3) arranged concentrically with the central axis (9) of the shaft (25) for axial movement relative to the shaft (25) and the housing (24) but fixed against rotation about the central axis relative to the housing (24), and the parking lock (1, 18) further comprising an engaging element (4) and a release element (6), the locking ring (3) being able to be displaced axially by the engaging element (4) into a positive locking connection with the parking lock wheel (2), so that the shaft (25) can be locked relative to the housing (24) against rotation about the central axis and the locking ring (3) can be released axially out of the locking connection by the release element (6), **characterised in that** the engaging element (4) is at least one spring (5) that biases the locking ring (3) axially against the release element (6) which is a piston (7) that can be actuated by a hydraulic pressure medium, the locking ring (3) can be disengaged axially out of the locking connection through the piston (7) actuated by the pressure medium, so that the locking ring (3) can be displaced against the biasing force of the spring (5).

2. A parking lock of claim 1, **characterised in that** the parking lock wheel (2) comprises a first locking gearing (11) and the locking ring (3, 19) comprises a second locking gearing (12) that is oriented toward the first locking gearing (11) and corresponds to the first locking gearing (11), and the locking connection can be established by an engagement of the second locking gearing (12) into the first locking gearing (11).

3. A parking lock of claim 2, **characterised in that** the first locking gearing (11) is configured continuously about the central axis (9) on an outer periphery of the parking lock wheel (2), and the second locking gearing (12) extends about the central axis (9) on the inside of the locking ring (3).

4. A parking lock of claim 1, **characterised in that** the locking ring (19) comprises a first support gearing (21), and the parking lock (18) comprises a second support gearing (22) that corresponds to the first support gearing (21), by means of the first support gearing (21), the locking ring (19) is rotationally fixed relative to the housing (24) and is axially displaceable relative to the shaft and the housing (24) while being at least guided in the second support gearing (22).

5. A parking lock of claim 1, **characterised in that** the parking lock (1) comprises at least one groove (8d) that is delimited on both sides in peripheral direction of the locking ring (3) and is open toward at least one entraining element (15) disposed on the locking ring (3), the entraining element (15) extends from the locking ring (3) into the groove (8d) and is axially displaceable in the groove (8d), by means of the entraining element (15), the locking ring (3) is rotationally fixed relative to the housing (24) and is axially displaceable relative to the shaft (25) and the housing (24) while being guided in the groove (8d).

6. A parking lock of claim 1, **characterised in that** the parking lock (1, 18) is an assembled unit consisting at least of one guide sleeve (8, 20), the locking ring (3, 19), the piston (7) and the spring (5), the locking ring (3, 19), the piston (7) and the spring (5) are received in the guide sleeve (8, 20), the locking ring (3, 19) and the piston (7) are guided for axial displacement in the guide sleeve (8, 20), while the locking ring (3, 19) is supported, fixed against rotation relative to the housing (24), in the guide sleeve (8, 20).

7. A parking lock of claim 6, **characterised in that** the guide sleeve (8) comprises, at least at one axial opening, a cover (16) comprising a through-hole (16b) for the shaft (25).

8. A parking lock of claim 6, **characterised in that** the guide sleeve (8, 20) comprises a pressure chamber (10) for the hydraulic pressure medium, the pressure chamber (10) is surrounded radially by legs (7a, 7b) of the piston (7) which extend parallel to the central axis (9), the piston (7) has an annular configuration and a U-shaped longitudinal section, the pressure chamber (10) is also surrounded, at least partially and intermittently, by the guide sleeve (8, 20), the pressure chamber (10) being defined axially on one side by an annular bottom (8a) of the guide sleeve (8, 20) and on the other side by a back of a bottom (7c) of the piston (7) oriented toward the locking ring (3, 19).

9. A parking lock of claim 8, **characterised in that** the parking lock (1, 18) comprises at least one seal (13, 14) arranged between the piston (7) and the guide sleeve (8, 20), the seal (13, 14) is arranged concentrically with the central axis (9) and bears against the guide sleeve (8, 20) and the piston (7) thereby sealing the pressure chamber (10).

10. A parking lock of claim 6 or 8, **characterised in that** the guide sleeve (8, 20) and the piston (7) are shaped parts made out of sheet metal.

11. A parking lock of claim 1, 6 or 8, **characterised in that** the locking ring (3, 19) is a punched and stamped part made out of sheet metal.

12. A parking lock of claim 1, 6 or 8, **characterised in that** the parking lock wheel is a shaped part.

## Revendications

1. Arrêt de stationnement (1, 18) d'une transmission, ledit arrêt de stationnement comprenant une roue d'arrêt de stationnement (2) qui est agencée concentriquement à l'axe central (9) d'un arbre en étant fixe axialement et en rotation par rapport à l'arbre (25) mais pouvant tourner par rapport à un boîtier (24) autour de l'axe central (9) de l'arbre (25) avec l'arbre (25), l'arrêt de stationnement (1, 18) comprenant, de plus, une bague d'arrêt (3) qui est agencée concentriquement à l'axe central (9) de l'arbre (25) en étant déplaçable axialement par rapport à l'arbre (25) et par rapport au boîtier (24) mais fixe en rotation par rapport au boîtier (24) autour de l'axe central, l'arrêt de stationnement (1, 18) comprenant, encore de plus, un élément d'embrayage (4) et un élément de débrayage (6), ladite bague d'arrêt (3) étant déplaçable par l'intermédiaire de l'élément d'embrayage (4) axialement dans une liaison d'arrêt à engagement positif avec la roue d'arrêt de stationnement (2), de sorte que l'arbre (25) peut être bloqué contre rotation autour de l'axe central (9) par rapport au boîtier (24), et que la bague d'arrêt (3) peut être dégagée axialement de la liaison d'arrêt par l'intermédiaire de l'élément de débrayage (6), **caractérisé en ce que** l'élément d'embrayage (4) est au moins un ressort (5) qui précontraint la bague d'arrêt (3) axialement contre l'élément de débrayage (6), cet élément de débrayage (6) est un piston (7) qui peut être actionné par un milieu hydraulique sous pression, ladite bague d'arrêt (3) pouvant être dégagée axialement de la liaison d'arrêt par l'intermédiaire du piston (7) actionné par le milieu sous pression, de sorte que ce piston (7) peut être déplacé à l'encontre de la précontrainte du ressort (5).

2. Arrêt de stationnement selon la revendication 1, **caractérisé en ce que** la roue d'arrêt de stationnement (2) comprend une première denture d'arrêt (11), et la bague d'arrêt (3, 19) comprend une seconde denture d'arrêt (12) faisant face à la première denture d'arrêt (11) et correspondant à la première denture d'arrêt (11), la liaison d'arrêt pouvant être réalisée du fait que la seconde denture d'arrêt (12) s'engage dans la première denture d'arrêt (11).

3. Arrêt de stationnement selon la revendication 2, **caractérisé en ce que** la première denture d'arrêt (11) est configurée de manière continue autour de l'axe central (9) sur la périphérie extérieure de la roue d'arrêt de stationnement (2), et **en ce que** la seconde denture d'arrêt (12) s'étend sur le côté intérieur de la bague d'arrêt (3) autour de l'axe central (9).

4. Arrêt de stationnement selon la revendication 1, **caractérisé en ce que** la bague d'arrêt (19) comprend une première denture de support (21), et l'arrêt de stationnement (18) comprend une seconde denture de support (22) correspondant à la première denture de support (21), et **en ce que**, au moyen de la première denture de support (21), la bague d'arrêt (19) est fixée en rotation par rapport au boîtier (24) et est axialement déplaçable par rapport à l'arbre et au boîtier (24) en étant au moins guidée dans la seconde denture de support (22).

5. Arrêt de stationnement selon la revendication 1, **caractérisé en ce que** l'arrêt de stationnement (1) comprend au moins une rainure (8d) qui est délimitée des deux côtés en direction périphérique de la bague d'arrêt (3) et est ouverte au moins vers un entraîneur (15) agencé sur la bague d'arrêt (3), l'entraîneur (15) s'étend à partir de la bague d'arrêt (3) dans la rainure (8d) dans laquelle il peut être déplacé axialement, et **en ce que**, au moyen de l'entraîneur (15), la bague d'arrêt (3) est fixée en rotation par rapport au boîtier (24) et est axialement déplaçable par rapport à l'arbre (25) et au boîtier (24) en étant guidée dans la rainure (8d).

6. Arrêt de stationnement selon la revendication 1, **caractérisé en ce que** l'arrêt de stationnement (1, 18) est un ensemble unitaire consistant au moins d'un manchon de guidage (8, 20), de la bague d'arrêt (3, 19), du piston (7) et du ressort (5), la bague d'arrêt (3, 19), le piston (7) et le ressort (5) étant reçus dans le manchon de guidage (8, 20), la bague d'arrêt (3, 19) et le piston (7) étant guidés en mouvement axial dans le manchon de guidage (8, 20) pendant que la bague d'arrêt (3, 19) est fixée en rotation par rapport au boîtier (24) dans le manchon de guidage (8, 20).

7. Arrêt de stationnement selon la revendication 6, **caractérisé en ce que** le manchon de guidage (8) est muni, à au moins une ouverture axiale, d'un couvercle (16) comprenant un trou de passage (16b) pour l'arbre (25).

8. Arrêt de stationnement selon la revendication 6, **caractérisé en ce que** le manchon de guidage (8, 20) comprend une chambre de pression (10) pour le milieu hydraulique sous pression (17), ladite chambre de pression (10) étant entourée radialement par des bras (7a, 7b) du piston (7) annulaire qui, en coupe longitudinale, a la forme d'un U, ces bras s'étendant en parallèle à l'axe central (9), et ladite chambre de pression (10) étant entourée, de plus, au moins en partie et de manière intermittente, par le manchon de guidage (8, 20), et **en ce que** la chambre de pression (10) est délimitée axialement de l'un côté par un fond annulaire (8a) du manchon de guidage (8, 20) et de l'autre côté, par le côté arrière d'un fond (7c) du piston (7) tourné vers la bague d'arrêt (3, 19).

9. Arrêt de stationnement selon la revendication 8, **caractérisé en ce que** l'arrêt de stationnement (1, 18) comprend au moins une garniture étanche (13, 14) qui est agencée entre le piston (7) et le manchon de guidage (8, 20), cette garniture (13, 14) étant disposée concentriquement à l'axe central (9) en s'appuyant contre le manchon de guidage (8, 20) et contre le piston (7) de manière à rendre étanche la chambre de pression (10).

10. Arrêt de stationnement selon la revendication 6 ou 8, **caractérisé en ce que** le manchon de guidage (8, 20) et le piston (7) sont des pièces formées en tôle.

11. Arrêt de stationnement selon la revendication 1, 6 ou 8, **caractérisé en ce que** la bague d'arrêt (3, 19) est une pièce découpée et estampée en tôle.

12. Arrêt de stationnement selon la revendication 1, 6 ou 8, **caractérisé en ce que** la roue d'arrêt de stationnement est une pièce formée.
